# EUROPEAN PATENT APPLICATION

(11) **EP 4 498 578 A1**
(43) Date of publication of application: **29.01.2025**
(21) Application number: 23790975.9
(22) Date of filing: 22.03.2023
(51) Int. Cl.: H02K 3/50

(54) **STATOR AND MOTOR HAVING SAME**

(30) Priority: 20.04.2022 CN 202220922438 U
(71) Applicant: Contemporary Amperex Technology Co., Limited, Ningde, Fujian 352100 (CN)
(72) Inventor: CHEN, Xing, Ningde, Fujian 352100 (CN); HUANG, Xiaojian, Ningde, Fujian 352100 (CN); YAN, Yu, Ningde, Fujian 352100 (CN); LIU, Tian, Ningde, Fujian 352100 (CN)
(74) Representative: Gong, Jinping
(86) International application number: PCT/CN2023/083096
(87) International publication number: WO 2023/202314

(57) **Abstract**

The present application relates to the technical field of motors, and specifically relates to a stator and a motor with the same. The present application is intended to solve a technical problem that a motor stator on the market has a complex fixing structure of a neutral wire. To this end, the present application provides a stator, comprising: a stator yoke portion provided with a plurality of windings; an insulating base arranged on a periphery of the plurality of windings; and a neutral wire arranged on the insulating base and connected to the plurality of windings. The stator provided in the present application improves the assembly stability of the neutral wire in the stator and the ease of operation of connecting the neutral wire to the plurality of windings by arranging the neutral wire on the insulating base, and greatly reduces the difficulty in fixing the neutral wire and the complexity of the fixing structure by assembling and fixing the neutral wire on the insulating base.

## Description

### CROSS-REFERENCE TO RELATED APPLICATION

The present application claims priority to Chinese Patent Application No. 202220922438.5 titled "STATOR AND MOTOR WITH SAME" filed on April 20, 2022, the entire content of which is incorporated herein by reference.

### TECHNICAL FIELD

The present application relates to the technical field of motors, and specifically relates to a stator and a motor with the same.

### BACKGROUND

This section provides merely background information related to the present disclosure, and is not necessarily the prior art.

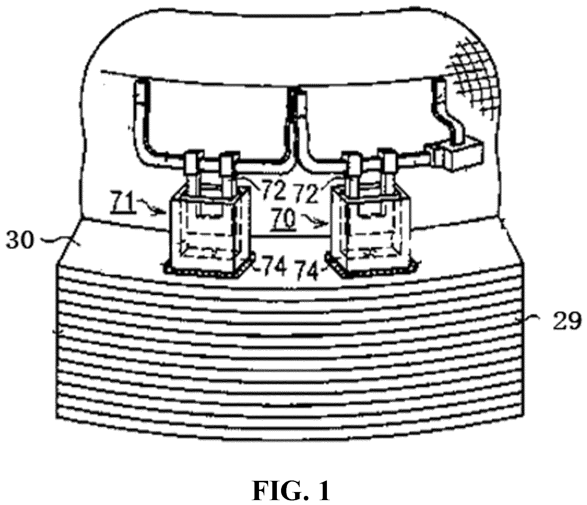

As shown in FIG. 1, a stator of a rotating motor in the prior art comprises a stator core 29, a plurality of phase windings, a neutral wire, and fixing components 70 and 71. The fixing components 70 and 71 fix the neutral wire on a yoke portion 30 via intermediate components 72 and 74. The intermediate components 72 and 74 are made of resin.

It can be seen that it is necessary to separately manufacture a boss of the fixing components and the intermediate components for the stator of the rotating motor in the prior art, the manufacturing process of the boss of the fixing components and the intermediate components is complex, and each of the fixing components needs to be connected separately. The connection of the neutral wire terminal is not fixed, and the mechanical vibration generated during the operation of the motor will increase the risk of virtual connection of the wire. Moreover, neutral wire lead-out measures are not considered for the stator of the rotating motor in the prior art, which is not conducive to the connection between the stator and an external circuit.

### SUMMARY OF THE INVENTION

The present application is intended to solve, at least to a certain extent, a technical problem that the fixing components of the neutral wire on the market have a relatively complex structure and poor assembly stability.

To achieve the above object, a first aspect of the present application provides a stator, comprising: a stator yoke portion provided with a plurality of windings; an insulating base arranged on a periphery of the plurality of windings; and a neutral wire arranged on the insulating base and connected to the plurality of windings.

The stator provided in the present application improves the assembly stability of the neutral wire in the stator and the ease of operation of connecting the neutral wire to the plurality of windings by arranging the neutral wire on the insulating base, and greatly reduces the difficulty in fixing the neutral wire and the complexity of the fixing structure by assembling and fixing the neutral wire on the insulating base.

In addition, according to the present application, the above-mentioned stator may further have the following additional technical features.

According to an embodiment of the present application, the stator yoke portion and the plurality of windings are each distributed annularly, and the insulating base and the neutral wire are each circumferentially distributed around the stator yoke portion and the plurality of windings.

According to an embodiment of the present application, the neutral wire is arranged in an end portion of the insulating base, a plurality of one ends of the plurality of windings are provided as a plurality of phase current terminals, and a plurality of the other ends of the plurality of windings are connected to the neutral wire.

According to an embodiment of the present application, the neutral wire is provided with a plurality of wiring terminals, and the plurality of windings are connected to the neutral wire through the plurality of wiring terminals.

According to an embodiment of the present application, the stator further comprises an external lead, and the neutral wire is connected to the external lead through a lead terminal.

According to an embodiment of the present application, the insulating base is provided as an integrally formed structure.

According to an embodiment of the present application, the insulating base is provided with a wire slot for accommodating the neutral wire.

According to an embodiment of the present application, the neutral wire is wrapped with an insulating tube, and the neutral wire is assembled in the wire slot of the insulating base through the insulating tube.

A second aspect of the present application further provides a motor, comprising: the stator according to the first aspect of the present application; and a junction box, wherein the stator is arranged inside the junction box, and the junction box is provided with a plurality of plug ports matching the stator.

According to an embodiment of the present application, the plurality of plug ports comprise: a plurality of phase current plug ports corresponding to a plurality of phase current terminals of a plurality of windings; and a neutral wire plug port corresponding to an external lead of the neutral wire.

According to an embodiment of the present application, a wire diameter of an external wire at the neutral wire plug port is 2-3 times as long as a wire diameter of each phase current wire at the plurality of phase current plug ports.

According to an embodiment of the present application, a wire diameter of the external lead is 2-3 times as long as a wire diameter of each phase wire of the plurality of windings.

According to an embodiment of the present application, a box body of the junction box is provided with a plurality of wiring markers corresponding to the plurality of phase current plug ports and the neutral wire plug port.

### DESCRIPTION OF DRAWINGS

Various other advantages and benefits will become apparent to those of ordinary skill in the art upon reading the following detailed description of the preferred embodiments. The drawings are for the purpose of illustrating the preferred implementations only and are not to be considered a limitation to the present application. Also, the same components are denoted by the same reference numerals throughout the drawings. In the figures:
FIG. 1 is a partially schematic structural diagram of a stator in the prior art;
FIG. 2 is a partially schematic structural diagram of a stator according to an embodiment of the present application;
FIG. 3 is an axonometric view of a stator according to an embodiment of the present application;
FIG. 4 is a side view of a stator according to an embodiment of the present application;
FIG. 5 is a front view of a junction box according to an embodiment of the present application; and
FIG. 6 is a top view of a junction box according to an embodiment of the present application.

Reference numerals are as follows:
10. stator; 11. stator yoke portion; 12. winding; 13. insulating base; 14. neutral wire; 15. shell; 16. connecting wire; 161. wiring terminal; 17. external lead; 171. lead terminal;
20. junction box; 201. box body; 21. first phase plug port; 22. second phase plug port; 23. third phase plug port; 24. neutral wire plug port; 25. first phase current wire; 26. second phase current wire; 27. third phase current wire; 28. external wire.

### DETAILED DESCRIPTION

Example embodiments of the present disclosure will be described in more detail below with reference to the drawings. The example embodiments of the present disclosure are shown in the drawings. However, it should be understood that the present disclosure can be implemented in various forms without being limited to the embodiments set forth herein. In contrast, these embodiments are provided to more thoroughly understand the present disclosure, and fully convey the scope of the present disclosure to those skilled in the art. It should be noted that the description of the motor in a three-phase four-wire system in the present application is only a preferred embodiment of the present application, and does not impose any limitation on the protection scope of the motor in the present application. For example, the motor in the present application may also be, e.g., a three-phase five-wire system. This adjustment is encompassed within the protection scope of the motor in the present application.

It should be understood that the terms used herein are only for the purpose of describing particular example embodiments, and are not intended to impose any limitation. The singular forms of "a," "an," and "the" as used herein also include plural forms, unless the context explicitly indicates otherwise. The terms of "comprise," "include," and "have" are inclusive and thus indicate the presence of stated features, elements and/or components, but do not exclude the presence or addition of one or more of other features, elements, components, and/or combinations thereof.

In the description of the present application, unless otherwise explicitly stipulated and defined, the terms of "arrange" and "connect" should be understood in a broad sense. For example, there may be a fixed connection, a detachable connection, or an integrated connection; and there may be a direct connection or an indirect connection through an intermediate medium. For those skilled in the art, the specific meanings of the above terms in the present application may be understood based on specific situations.

For ease of description, spatially relative terms may be used herein to describe a relationship of one element or feature relative to another element or feature as shown in the figures, such as "outer," "circumferential," "end" etc. Such spatially relative terms are intended to encompass different orientations of a mechanism in use or operation in addition to the orientation depicted in the figures. For example, if the mechanism in the figures turns over, an element described as "under other elements or features" or "below other elements or features" would then be oriented as "over other elements or features" or "above other elements or features". Thus, the example term "below" may include orientations of above and below. The mechanism may be otherwise oriented (rotated by 90 degrees or in other directions), and may be interpreted accordingly using the spatially relative descriptors herein.

The stator of the motor comprises a stator, a plurality of windings, a neutral wire, and a fixing component for fixing the neutral wire. One lead terminal of each winding is supplied with a phase current, the other lead terminal of each winding is a neutral point connecting portion, and the other lead terminal is led out from an axial end portion of the stator. The neutral wire connects the neutral point connecting portions of the windings of different phases together, and the neutral wire is separated from the windings. However, the fixing component in the prior art has a complex structure and poor assembly stability.

Based on this, the present application presents a stator and a motor with the same, and solves a technical problem that the fixing component in the prior art has a relatively complex structure and poor assembly stability.

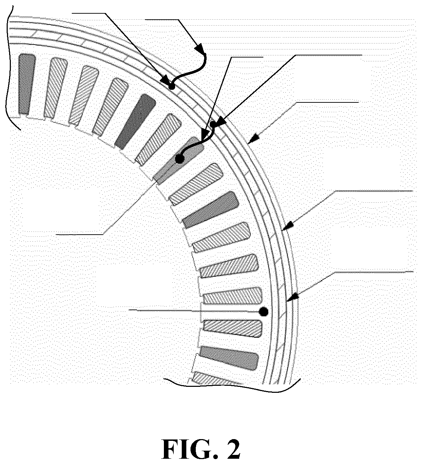

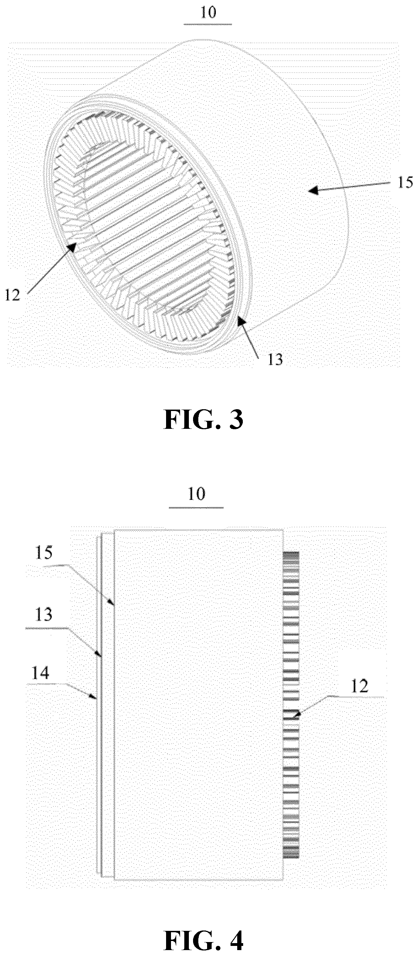

As shown in FIGS. 2-4, according to an embodiment of the present application, the first aspect of the present application provides a stator 10. The stator 10 comprises: a stator yoke portion 11, the stator yoke portion 11 being provided with a plurality of windings 12; an insulating base 13, the insulating base 13 being arranged on a periphery of the plurality of windings 12; and a neutral wire 14, the neutral wire 14 being arranged on the insulating base 13, and the neutral wire 14 being connected to the plurality of windings 12.

The stator 10 provided in the present application improves the assembly stability of the neutral wire 14 in the stator 10 and the ease of operation of connecting the neutral wire 14 to the plurality of windings 12 by arranging the neutral wire 14 on the insulating base 13, and greatly reduces the difficulty in fixing the neutral wire 14 and the complexity of the fixing structure by assembling and fixing the neutral wire 14 on the insulating base 13.

Specifically, the stator 10 further comprises a shell 15 arranged on a periphery of the insulating base 13. A space for arranging the insulating base 13 and the neutral wire 14 is formed between the shell 15 and the stator yoke portion 11, and the insulating base 13 is configured to insulate the shell 15 from the stator yoke portion 11. An embodiment of the present application presents to arrange the neutral wire 14 on the insulating base 13. Compared with arrangement of the neutral wire 14 on the stator yoke portion 11 through a fixing member, the insulating base 13 can provide the neutral wire 14 with a sufficient mounting space, and the insulating base 13 facilitates structural modification to mount and fix the neutral wire 14, which can reduce the assembly process difficulty of the neutral wire 14. In addition, the neutral wire 14 is provided with the sufficient mounting space and the fixing structure through the insulating base 13, so that the neutral wire 14 can be firmly arranged on the insulating base 13, thereby reducing the virtual connection phenomenon when the stator 10 is subjected to factors such as mechanical vibration, and improving the connection reliability between the neutral wire 14 and the windings 12.

Further, the stator 10 further comprises an external lead 17. The external lead 17 is connected to the neutral wire 14 and extends to the outside of the stator 10. The insulating base 13 can provide the neutral wire 14 with the sufficient mounting space and the fixing structure, so that the neutral wire 14 can be firmly arranged on the insulating base 13. On the basis of firm assembly of the neutral wire 14 to the insulating base 13, a lead terminal 171 that matches the external lead 17 may be further arranged on the neutral wire 14, so that the neutral wire 14 has objective conditions for connection to the external lead 17. The embodiment of the present application achieves the effects of leading out the neutral wire 14, thereby completing the construction of a three-phase four-bridge arm, and achieving the technical effects of effectively utilizing the neutral wire 14 for circuit modification and expansion.

It should be noted that in the embodiment of the present application, the relative positional relationship and the fixing method between the insulating base 13 and the neutral wire 14 is not limited, because the neutral wire 14 may be arranged in, e.g., an end portion or a middle portion of the insulating base 13, the neutral wire 14 may be embedded in the insulating base 13, and the insulating base 13 may be further provided with a snap-fit structure for fixing the neutral wire 14. All of these relative positional relationships and fixing methods are encompassed within the protection scope of the present application, and can achieve the purpose of arranging the neutral wire 14 on the insulating base 13.

Further referring to FIGS. 2-4, according to an embodiment of the present application, the stator yoke portion 11 and the plurality of windings 12 are each distributed annularly, and the insulating base 13 and the neutral wire 14 are each circumferentially distributed around the stator yoke portion 11 and the plurality of windings 12.

In the present embodiment, a stator core is arranged as an annular structure, and is provided with a plurality of slots. The stator core is divided into a plurality of yoke portion subblocks along a circumferential direction of the plurality of slots, and the plurality of yoke portion subblocks are connected sequentially to enclose the annularly distributed stator yoke portion 11. There is one-to-one correspondence between the plurality of windings 12 and the plurality of yoke portion subblocks. The plurality of windings 12 are arranged in an annular distribution corresponding to the stator yoke portion 11. The neutral wire 14 is arranged on the insulating base 13, so that the neutral wire 14 and the insulating base 13 are arranged around the circumferentially distributed stator yoke portion 11 and the plurality of windings 12, thereby improving the flexibility of a plurality of connection positions between the neutral wire 14 and the plurality of windings 12. For example, any three points distributed along a circumferential direction on the neutral wire 14 and the plurality of windings 12 can form three-phase connections, thereby reducing the constraints of the connection positions between the neutral wire 14 and the plurality of windings 12, and improving the distribution flexibility of the stator yoke portion 11, the plurality of windings 12, and the neutral wire 14.

It should be noted that in the embodiment of the present application, the specific structures and the mounting positions of the neutral wires 14 are not limited, because the structure of the neutral wires 14 comprises a full circle structure or a half circle structure, and the neutral wires 14 can be embedded into the insulating base 13 or snap fitted to the insulating base 13. All of these specific structures and the mounting positions of the neutral wires 14 are encompassed within the protection scope of the stator 10 of the present application, and can achieve the purpose of arranging the neutral wires 14 on the insulating base 13.

Further referring to FIGS. 2-4, according to an embodiment of the present application, the neutral wire 14 is arranged in the end portion of the insulating base 13, a plurality of one ends of the plurality of windings 12 are provided as a plurality of phase current terminals, and a plurality of the other ends of the plurality of windings 12 are connected to the neutral wire 14.

In the present embodiment, one lead terminal of each winding 12 is supplied with a phase current, the other lead terminal of each winding 12 is a connecting portion connected to the neutral wire 14, and the other lead terminal is led out from an axial end portion of the stator 10. The neutral wire 14 connects the connecting portions of the windings 12 of different phases together.

In addition, in the embodiment of the present application, the specific numbers of the plurality of windings 12, the plurality of one ends, and the plurality of phase current terminals are not limited, because the specific numbers of the plurality of windings 12, the plurality of one ends, and the plurality of phase current terminals depend on the stator 10 and the number of phases of the motor. For example, when the motor and stator 10 are a three-phase motor, the stator 10 comprises three one ends and three phase current terminals, and the plurality of windings 12 comprise 3 windings 12 or 6 windings 12, etc.; and when the motor and stator 10 are a two-phase motor, the stator 10 comprises two one ends and two phase current terminals, and the plurality of windings 12 comprise 2 windings 12, 4 windings 12, or 6 windings 12, etc., which are not exemplified here one by one.

Further referring to FIGS. 2-4, according to an embodiment of the present application, the neutral wire 14 is provided with a plurality of wiring terminals 161, and the plurality of windings 12 are connected to the neutral wire 14 through the plurality of wiring terminals 161.

In the present embodiment, the plurality of windings 12 are directly connected to the wiring terminals 161 or connected to the wiring terminals 161 through connecting wires 16. In the case where the plurality of windings 12 are connected to the wiring terminals 161 through the connecting wires 16, the plurality of windings 12 are also provided with the wiring terminals 161 for connection to the connecting wires 16. In the embodiment of the present application, by arranging the wiring terminals 161 on the neutral wire 14 and/or the plurality of windings 12, the wiring terminals 161 not only can improve the connection reliability between the plurality of windings 12 and the neutral wire 14, but also can improve the connection efficiency and connection flexibility between the plurality of windings 12 and the neutral wire 14.

According to an embodiment of the present application, the neutral wire 14 is wrapped with an insulating tube (not shown in the figure), and the neutral wire 14 is assembled in a wire slot of the insulating base 13 through the insulating tube.

In the present embodiment, in order to improve the insulation effects of the insulating base 13 between the neutral wire 14 and the shell 15 of the stator 10, the embodiment of the present application further presents to wrap the neutral wire 14 with the insulating tube, so that the neutral wire 14 is assembled in the wire slot of the insulating base 13 through the insulating tube. The insulating tube not only can achieve the purpose of insulating the neutral wire 14, but also can be snap fitted to the wire slot of the insulating base 13 through its own plastic deformation. The insulating tube not only improves the assembly stability between the neutral wire 14 and the insulating base 13, but also can reduce the occurrence of a conductive contact phenomenon between the neutral wire 14 and the shell 15 of the stator 10.

Further referring to FIGS. 2-4, according to an embodiment of the present application, the neutral wire 14 is further provided with a lead terminal 171, so that the external lead 17 is connected to the neutral wire 14 through the lead terminal 171.

In the present embodiment, by arranging the lead terminal 171 on the neutral wire 14 in the embodiment of the present application, the lead terminal 171 not only can improve the connection reliability between the external lead 17 and the neutral wire 14, but also can improve the connection efficiency and the connection flexibility between the external lead 17 and the neutral wire 14. The lead terminal 171 enables the neutral wire 14 to have objective conditions for connection to the external lead 17, so that the stator 10 can achieve the effects of leading out the neutral wire 14, thereby completing the construction of the three-phase four-bridge arm, and achieving the technical effects of effectively utilizing the neutral wire 14 for circuit modification and expansion.

Further referring to FIGS. 2-4, according to an embodiment of the present application, the insulating base 13 is provided as an integrally formed structure.

In the present embodiment, the insulating base 13 is arranged as an integrally formed structure, thereby reducing the complexity of the manufacturing process of the insulating base 13, reducing the structural complexity and manufacturing process difficulty of the stator 10, and ameliorating the technical problem that the neutral wire fixing components in the prior art have a relatively complex structure and poor assembly stability.

Further referring to FIGS. 2-4, according to an embodiment of the present application, the insulating base 13 is provided with a wire slot for accommodating the neutral wire 14.

In the present embodiment, the end portion or middle portion of the insulating base 13 is provided with a wire slot of an annular structure distributed along a circumferential direction of the insulating base 13, and the neutral wire 14 is snap fitted to the wire slot of the insulating base 13 through a clamp or a portion-limiting structure, thereby improving the assembly stability of the neutral wire 14, and reducing the phenomenon of swaying and virtual connection of the neutral wire 14 after being subjected to the vibration of the stator 10.

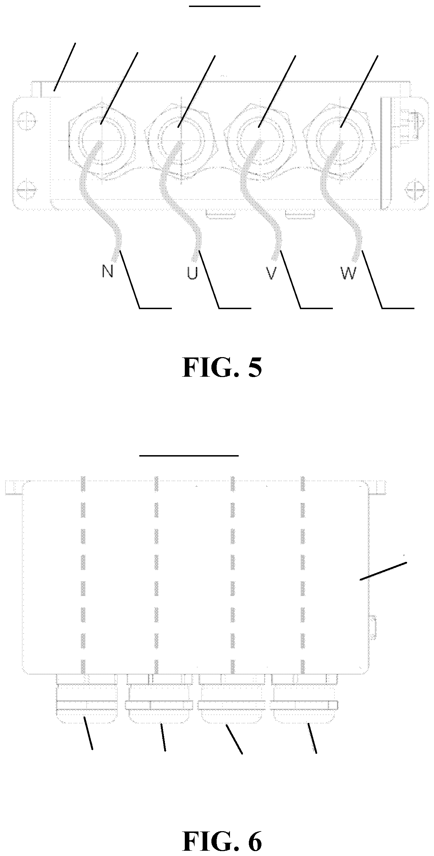

As shown in FIGS. 5 and 6, the second aspect of the present application further provides a motor, comprising: the stator 10 according to the first aspect of the present application; and a junction box 20, wherein the stator 10 is arranged inside the junction box 20, and the junction box 20 is provided with a plurality of plug ports matching the stator 10.

In the present embodiment, the motor has all of the structures and technical effects of the stator 10 in the first aspect of the present application, so that the structure and technical effects of the stator 10 will not be repeated here. Further, the embodiment of the present application achieves the effects of leading out the neutral wire 14 of the stator 10 through the plurality of plug ports, thereby completing the construction of a three-phase four-bridge arm, and achieving the technical effects of effectively utilizing the neutral wire 14 for circuit modification and expansion.

Further referring to FIGS. 5 and 6, according to an embodiment of the present application, the plurality of plug ports comprise: a plurality of phase current plug ports corresponding to a plurality of phase current terminals of a plurality of windings 12, and a neutral wire plug port 24 corresponding to an external lead 17 of the neutral wire 14.

In the present embodiment, the present invention is intended to provide a novel structure for leading out a neutral wire 14 of a three-phase motor to the junction box 20 of the motor, to achieve the purpose of leading out the neutral wire 14 of the three-phase motor and constructing a three-phase four-bridge arm. Specifically, by expanding the plug port of the three-phase motor, a neutral wire plug port 24 is parallelly connected to the left side or right side of a three-phase plug port (a first phase plug port 21, a second phase plug port 22, and a third phase plug port 23) of the original three-phase motor. An external wire 28 connected to the neutral wire plug port 24 is inserted into the inside of the junction box 20 in parallel with three-phase wires, and is connected to the neutral wire 14 fixed on the insulating base 13, thereby achieving the purpose of constructing the three-phase four-bridge arm.

Further, further referring to FIGS. 5 and 6, according to an embodiment of the present application, a wire diameter of the external wire 28 connected to the external lead 17 at the neutral wire plug port 24 is 2-3 times as long as a wire diameter of each phase current wire (a first phase current wire 25, a second phase current wire 26, and a third phase current wire 27) at the plurality of phase current plug ports.

In the present embodiment, when there is a harmonic current in a three-phase four-wire circuit, the effect of the harmonic current should be included when the current of the neutral wire 14 is computed, and a third harmonic is equal to 3 times as much as the harmonic current of the phase wire, so that when a harmonic content is greater than 33%, it means that the current superimposed on the neutral wire 14 is greater than the phase wire current. The neutral wire 14 should be selected based on actual current of the neutral wire 14. Theoretically, the current of the neutral wire 14 may be 2-3 times as much as the phase wire current. Therefore, the embodiment of the present application presents to set the wire diameter of the external wire 28 to 2-3 times as much as the wire diameter of the plurality of phase current wires.

According to an embodiment of the present application, a wire diameter of the external lead 17 is 2-3 times as long as a wire diameter of each phase wire of the plurality of windings 12.

In the present embodiment, the wire diameter of the external lead 17 is set to 2-3 times as long as the wire diameter of the phase wire of the windings 12. Also based on considerations of current, when there is the harmonic current in the three-phase four-wire circuit, theoretically, the current of the neutral wire 14 may be 2-3 times as much as the phase wire current. Therefore, the embodiment of the present application presents to set the wire diameter of the external lead 17 to 2-3 times as long as the wire diameter of each phase wire of the plurality of windings 12, thereby ensuring the reliability and safety of the structure.

Further referring to FIGS. 5 and 6, according to an embodiment of the present application, a box body 201 of the junction box 20 is provided with a plurality of wiring markers corresponding to the plurality of phase current plug ports (the first phase plug port 21, the second phase plug port 22, and the third phase plug port 23) and the neutral wire plug port 24. The arrangement of the wiring markers on the box body 201 of the junction box 20 can reduce the occurrence of a phenomenon of mixed connection between the three-phase current wires (the first phase current wire 25, the second phase current wire 26, and the third phase current wire 27) of the stator 10 and the external wire 28, is conducive to quick wiring of the three-phase wires and the external wire 28, and improves the wiring efficiency.

It should be noted that in the embodiments of the present application, only the structures of the stator 10 and the motor that are associated with the improvements of the present application are illustrated, but it does not mean that the stator 10 and the motor do not have other structures. For example, in the embodiments of the present application, the stator 10 further comprises a fixing structure for fixing the insulating base 13, and the motor further comprises, e.g., a rotor and a sealing structure. These structures and embodiments are all encompassed within the protection scope of the present application, and will not be repeated in detail here.

While the above description merely provides preferred specific embodiments of the present application, the scope of protection of the present application is not limited to the preferred specific embodiments. Any person skilled in the present technical field can easily conceive of alterations or replacements within the technical scope disclosed in the present application. All these alterations or replacements should be encompassed within the scope of protection of the present application. Therefore, the scope of protection of the present application shall be determined by the scope of protection of the claims.

## Claims

1. A stator, comprising:
a stator yoke portion provided with a plurality of windings;
an insulating base arranged on a periphery of the plurality of windings; and
a neutral wire arranged on the insulating base and connected to the plurality of windings.

2. The stator according to claim 1, wherein the stator yoke portion and the plurality of windings are each distributed annularly, and the insulating base and the neutral wire are each circumferentially distributed around the stator yoke portion and the plurality of windings.

3. The stator according to claim 1 or 2, wherein the neutral wire is arranged in an end portion of the insulating base, and a plurality of one ends of the plurality of windings are provided as a plurality of phase current terminals, and a plurality of the other ends of the plurality of windings are connected to the neutral wire.

4. The stator according to any one of claims 1-3, wherein the neutral wire is provided with a plurality of wiring terminals, and the plurality of windings are connected to the neutral wire through the plurality of wiring terminals.

5. The stator according to any one of claims 1-4, wherein the stator further comprises an external lead, and the neutral wire is connected to the external lead through a lead terminal.

6. The stator according to any one of claims 1-5, wherein the insulating base is configured as an integrally formed structure.

7. The stator according to any one of claims 1-6, wherein the insulating base is provided with a wire slot for accommodating the neutral wire.

8. The stator according to claim 7, wherein the neutral wire is wrapped with an insulating tube, and the neutral wire is assembled in the wire slot through the insulating tube.

9. A motor, comprising:
the stator according to any one of claims 1-8; and
a junction box, wherein the stator is arranged inside the junction box, and the junction box is provided with a plurality of plug ports matching the stator.

10. The motor according to claim 9, wherein the plurality of plug ports comprise: a plurality of phase current plug ports corresponding to a plurality of phase current terminals of a plurality of windings; and a neutral wire plug port corresponding to an external lead of the neutral wire.

11. The motor according to claim 10, wherein a wire diameter of an external wire at the neutral wire plug port is 2-3 times as long as a wire diameter of each phase current wire at the plurality of phase current plug ports.

12. The motor according to claim 10 or 11, wherein a wire diameter of the external lead is 2-3 times as long as a wire diameter of each phase wire of the plurality of windings.

13. The motor according to any one of claims 10-12, wherein a box body of the junction box is provided with a plurality of wiring markers corresponding to the plurality of phase current plug ports and the neutral wire plug port.
